# EUROPEAN PATENT APPLICATION

(11) **EP 1 309 153 A1**
(43) Date of publication of application: **07.05.2003**
(21) Application number: 01309312.5
(22) Date of filing: 02.11.2001
(51) Int. Cl.: H04L 29/08, H04L 29/06

(54) **File download operation**

(71) Applicant: BRITISH TELECOMMUNICATIONS public limited company, London EC1A 7AJ (GB)
(72) Inventor: The designation of the inventor has not yet been filed
(74) Representative: Lidbetter, Timothy Guy Edwin

(57) **Abstract**

During a process of downloading a large datafile from a database to a remote terminal using a data server system, the destination terminal displays additional amusing, edifying or interesting information such as details of useful website addresses, interesting "trivia", news, advertising, quizzes, status information about the file or about progress in the downloading process, or other information which can make the downloading process more interesting for the user. The additional data may be retrieved from the same database as the requested information, but it may be retrieved from elsewhere, such as an internet gateway server or the user terminal itself. The data is displayed at the beginning of the download of the requested file, and may be changed or updated during the download procedure if a large file is to be transmitted. To facilitate this the requested data may be divided into a number of segments, with the additional data transmitted between the segments. The number of segments may be selected according to the time required to transmit the requested data, as determined by factors such as the data rate of the connection over which the download process is to take place, and the amount of data to be downloaded. Further data, for example quiz answers, may be displayed at the end of the download procedure.

## Description

This invention relates to the process of downloading data from a database to a remote terminal, using a data provision system, generally known as a "server". The invention is applicable to many types of system but for the sake of illustration it will be described with particular reference to "WAP" (Wireless Application Protocol")-enabled systems. WAP terminals are wireless terminals configured to access "Internet" addresses over a cellular telephone connection. The terminals correspond with suitably configured websites using a simplified version of the standard "http" (hypertext transfer protocol) known as "WTP" (wireless transfer protocol) which minimises the content to include only the essential information (e.g. by omitting graphical information and transmitting only text).

Nevertheless, download of data over a WAP connection can take a noticeable length of time. Such systems have a relatively slow bit-rate, either because of features of the terminal design or because of the capacity of the communications connection over which the data is to be transmitted. Normally during a file download in a WAP session the terminal displays a scrolling bar indicating that there is a download in progress. As far as the user is concerned, this is at best idle time when the terminal is doing nothing of interest, and can be irritating as the terminal cannot be used for anything else whilst the download progresses.

The applicant's earlier European patent application 01308373.8, filed on October 1^{st} 2001, allows the user to suspend such a download if he wishes to use the terminal for another purpose, or wishes to continue the downlaod at a later time, for example to make use of a cheaper tariff period or a time when more bandwidth is available. However, the terminal will still be unavailable for use when the download is eventually performed.

According to the invention, there is provided a process of downloading requested data from a database to a remote terminal using a data server system, wherein additional information is provided for display on a terminal during the file download. The additional data may be retrieved from the same database as the requested information, but it may be retrieved from elsewhere, such as an internet gateway server or the user terminal itself. If the additional data is transmitted to the terminal it may be displayed immediately, or stored there for subsequent display.

The display of this additional information will be referred to in the specification as a "splash screen". The additional information may be generated by the server or by the content provider, and may comprise plain text, moving pictures, or other information. The text could consist of amusing, edifying or interesting information such as details of useful website addresses, interesting "trivia", news, advertising, quizzes, or any other information which can make the process more interesting for the user during the download period. The data could also give status information about the file or about progress in the downloading process. The splash screen data is preferably displayed at the beginning of the download of the requested file, and may be updated during the download procedure if a large file is to be transmitted, more than one screen may be displayed in succession. To facilitate this the requested data may be divided into a number of segments, with the additional data transmitted between the segments. The number of segments may be selected according to the time required to transmit the requested data, as determined by factors such as the data rate of the connection over which the download process is to take place, and the amount of data to be downloaded.

Further data may be displayed at the end of the download procedure, for example answers to quiz questions set in earlier screens.

The additional data may be selected from a database according to factors such as the number of segments to be transmitted, and user preferences recorded in a user profile.

In one embodiment, the splash screen may be generated locally by the handset. The material to be displayed could be stored by the terminal. The splash screen details may instead be stored on a content provider or a WAP server, and sent to the handset at times when there is a connection but no other data has been requested, for the handset to use as required subsequently. However, this arrangement is not suitable if real-time data is required.

In another embodiment the server controls the splash screen process during a file download, transmitting information downloaded from a content provider for display on the handset whilst download of the requested information is in progress, or sending control signals to the handset to display the appropriate material. The handset displays the splash screen until file download is completed. This additional data will add an overhead to the time taken for the download procedure. If used on a high bandwidth system there is no major restriction on download time and content displayed, but in a low bandwidth system, to avoid this overhead being excessive, it is preferable to transmit only simple messages, or control signals to cause the terminal to carry out predetermined functions.

Embodiments of the invention will now be described, by way of example, with reference to the Figures, in which
Figure 1 is a schematic diagram of the elements which co-operate to perform the invention:
Figure 2 is a flow diagram indicating the operation of the content server 7 of the embodiment. Certain elements not used in all embodiments are shown in dotted and chain-dotted outline.

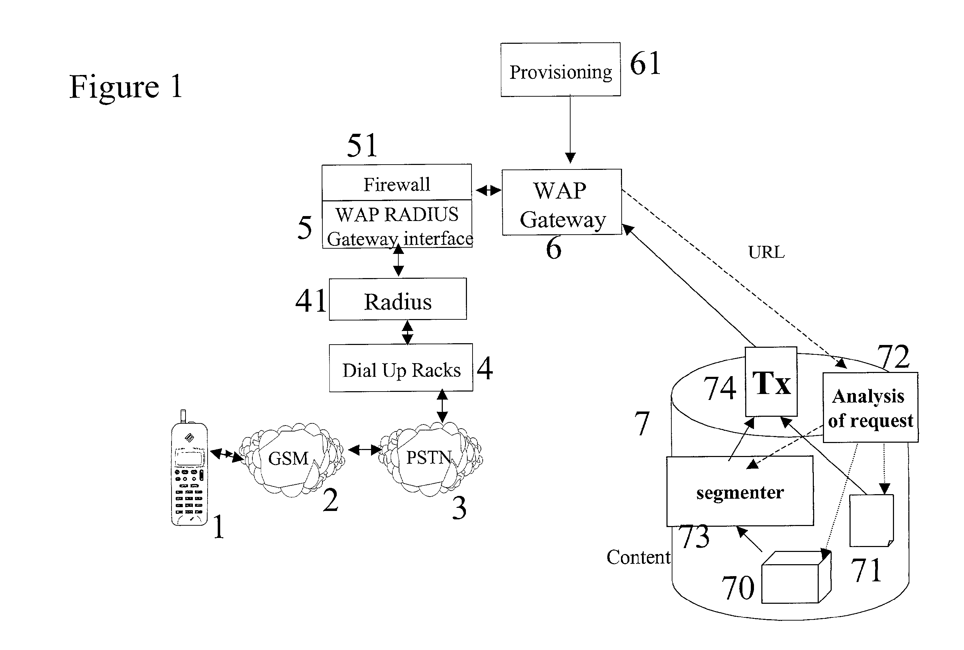

Figure 1 shows the main elements of a WAP-based embodiment. The principal elements are the content server 7 and the remote client terminal 1. All the other elements are only required to enable a WAP session to take place. For a normal internet browsing session the internal elements of the system would change appropriately.

A terminal, here embodied as a WAP-enabled cellular telephone 1, is connected over a telephone system 2, 3, 4 to a gateway server 6. The telephone system is shown as a GSM cellular network 2 connected, through a fixed PSTN switched system 3, to a set of dial-up racks 4, which are banks of modems located in the PSTN network and configured to receive data calls.

In this embodiment access to the gateway 6 is controlled through a Remote Access Dial-Up Server 41 (known by the acronym RADIUS) which adds an extra layer of security for remote workers who are accessing a private network, and also issues IP numbers to the handset. The interface 5 between the PSTN 3,4,41 and the gateway 6 also incorporates a firewall system 51 for additional security.

Associated with the gateway 6 there is a provisioning server 61 which is used to authenticate devices 1 attempting to connect to the gateway 6.

The gateway 6 has access, over the "Internet", to a data server 7 which stores the content (e.g. media files, text information etc) that can be sent to the handset during a WAP session. The user terminal 1 transmits an address code ("url") to identify the individual item of content 70 required. The content may have to be retrieved from another server (not shown) if it is not already available on the content server 7. Such retrieved content can be stored in the content server 7, both for buffering purposes if part of the conection 1,2,3,4,5,6,7 has a lower data transmission rate than the means by which the data server 7 retrieves it from its source, and also to allow future retrieval of the same data by the same handset 1 or others having access to the content server 7. A content server used in this way is known as a "proxy server"

Certain addresses 71 in the content server 7 are not accessible manually by the user. Instead, they are transmitted automatically by the data content server 7 under certain conditions, in particular, when a large file 70 such as a media clip has been requested.

The content server 7 has request analysis means 72 for receiving requests for data, associated with other information relating to the request such as the identity of the user requesting the data, (or a user profile for that user), and the data rate of the connection over which the data is to be transmitted. The request analysis means 72 operates to select the requested data 70 and to control processes applied to the data before transmission, including the selection and provision of the additional data 71.

One of the functions performed by the analysis means 72 is to determine whether the the number of segments (one or more) in which the requested data is to be transmitted. Means 73 are provided for dividing the data into the required number of segments. The requested data 70 and additional data 71 are assembled and transmitted to the user terminal 1 by a transmission section 74.

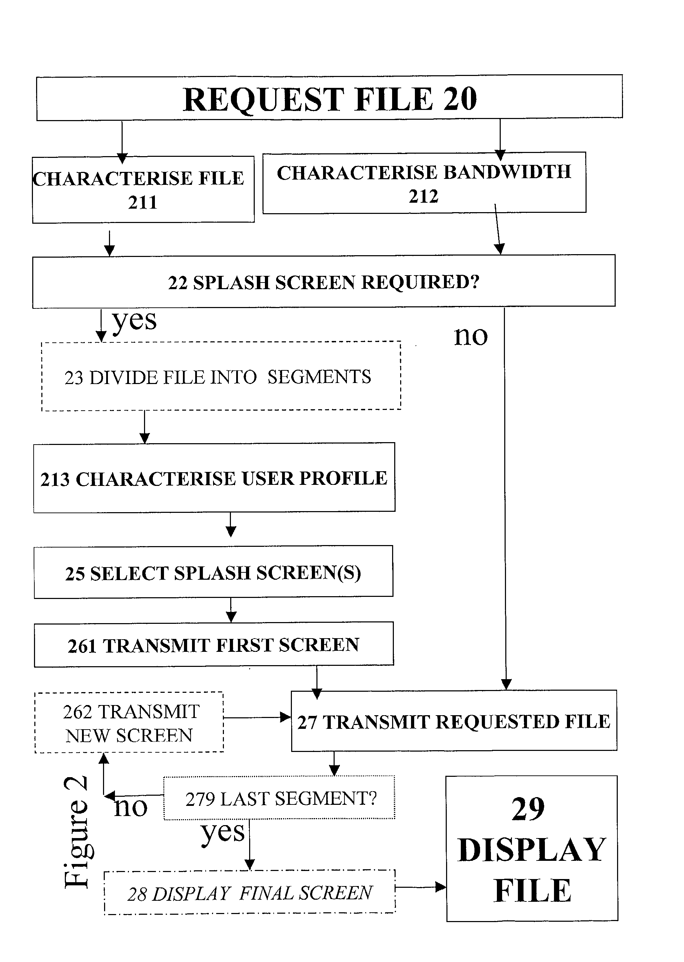

As shown in Figure 2, when a file 70 has been requested (step 20), the analysis means 72 first characterises the type and size of file requested (step 211), the data rate of the communications connection 2,3,4,5 (step 212), and also obtains a user profile (step 213) relating to the capabilities of the terminal 1 and any expressed preferences.

The analysis means 72 also controls the download process and determines whether to download splash screen data 71, (step 22), based on criteria such as the capabilities of the handset 1, any user preferences, the size of the requested file 70 or under the control of the system operator. If the request meets certain criteria, in particular on file size and on data rate over the connection to the terminal 1, the transmitter 74 transmits a splash screen file 71 (step 261) before the download of the requested file 70 is initiated (step 27), and according to the criteria set in the characterising step (211,212,213) may also be invoked at other times during the download procedure (step 262) between segments (27) of the requested data, or after it has been completed. If the criteria are not met the requested file 70 is simply transmitted to the terminal (step 27) with no splash screen 71.

The splash screen 71 is a short data file that takes minimal time to transmit, and provides some data for display to the user whilst the requested file 70 is downloaded.

Further splash screens may be displayed during the download process. The data for these may be transmitted at the same time as the initial screen (step 261), or at a later stage (step 262), as will be described shortly. When download (27) is completed, the splash screen currently displayed on the terminal is replaced by the requested data 70 (step 29). An instruction to the terminal 1 instructing it to display a concluding splash screen may be transmitted (step 28), for example giving the answers to a puzzle set in the initial splash screen 26), before the requested data is displayed (step 29). The data for the concluding screen (28) may be transmitted at the end of the requested data (step 27) for immediate display (step 28) or it may be transmitted with the initial splash screen (step 261), being stored by the terminal 1 until it is required.

The service can be configured by the network operator such that splash screen data can be transmitted during transmission of the content 70 requested by the user (step 262), according to the size of the file 70 and the nature of the information in the splash screen 71. To achieve this, the segmenter 73 breaks the requested file 70 into segments (step 23) so that updated splash screen information can be transmitted (step 262) in between these segments (steps 27, 279). (Steps 23, 262, 279 are shown in dotted outline to indicate that they are only used in this variant of the embodiment)

Different splash screen contents 71 may be stored by the content server 7, selectable (step 25) according to a stored profile of the user 1, the subject matter of the requested file 70, the size of the file requested 70, and other criteria. For example, the splash screen may present the user with a puzzle on a subject of interest to the user, the difficulty of the puzzle being selected according to the projected download time for the requested file 70 (or a segment thereof). The solution is presented to the user at the end of the download of the requested file 70 (step 28) or at some other time during the download process.

If real-time data is not required, an alternative embodiment may be used in which the splash screen may be generated locally by the handset 1. This limits the scope of the information that can be displayed, but avoids delaying the delivery of the requested data 70. The process (steps 20, 261, 27, 29) is a simplified version of that employed when the screen is generated by the content server 7, as certain features, such as splitting transmision into segments (step 23) and providing new data between the segments (step 262) would not be under the control of the terminal 1. In this embodiment, the terminal 1 may be pre-programmed with the splash screen data. Alternatively, the material 71 to be displayed could be downloaded from the content provider 7 or the WAP server 6 to the handset 1 at times when a connection is available but is not in use, for the handset 1 to use subsequently as required. This allows the information in the splash screens to be replaced from time to time to keep 5 it relevant and interesting. The content server 7 could store a number of items and download the whole batch for the handset 1 to store locally.

In another alternative arrangement, the additional data 71 may be supplied by the gateway 6. As the provisioning server 61 associated with the gateway 6 has information about the individual users 1, this makes selection of additional data, to fit user profiles and data rates, simpler but allows less flexibility in how to adapt the required data 70.

Although the invention has primarily been described with reference to a very low bandwidth system, in which the waiting times for information download are greatest, the invention is also suitable for use on higher bandwidth systems.

## Claims

1. A process of downloading requested data from a database to a remote terminal using a data server system, wherein additional information is provided for display on a terminal during the file download.

2. A process according to claim 1, wherein the additional data is transmitted to the terminal by the data server system.

3. A process according to claim 1 or claim 2, wherein the additional data is stored in the terminal for subsequent display

4. A process according to any preceding claim, wherein the requested data is divided into a number of segments, with the additional data transmitted between the segments.

5. A process according to claim 4, wherein the number of segments is selected according to the time required to transmit the requested data.

6. A process according to claim 5, wherein the number of segments is selected according to the data rate of the connection over which the download process is to take place

7. A process according to claim 5 or 6, wherein the number of segments is selected according to the amount of data to be downloaded.

8. A process according to claim 5, 6 or 7 wherein the additional data is selected from a database according to the number of segments to be transmitted.

9. A process according to any preceding claim, wherein the additional data is selected from a database according to a user profile.

10. A process according to any preceding claim, wherein the additional data and requested data are retrieved from different databases.

11. A data server for downloading requested data from a database to a remote terminal, having means for downloading additional information for display on a terminal during the file download process.

12. A data server according to claim 11 comprising means for transmitting the additional data to the terminal for subsequent display

13. A data server according to claim 11 or 12, comprising means for dividing the requested data into a number of segments, and transmitting the additional data between the segments.

14. A data server according to claim 13, comprising means for determining the time required to transmit the requested data, and means for selecting the number of segments according to the time so determined.

15. A data server according to claim 14, wherein the means for determining the transmisison time comprises means for determining the data rate of the connection over which the download process is to take place

16. A data server according to claim 14 o r 15, wherein the means for determining the transmission time comprises means for determining the amount of data to be downloaded.

17. A data server according to claim 14, 15, or 16, comprising a database of additional data, and means for selecting additional data from the database according to the number of segments to be transmitted.

18. A data server according to claim 11, 12, 13, 14, 15, 16 or 17, comprising a database of additional data, and means for identifying a user profile associated with the terminal requesting the data and selecting data from the database according to the user profile.

19. A data server according to claim 11, 12, 13, 14, 15, 16, 17 or 18, having means for retrieving the additional data and requested data from different databases.
